# EUROPEAN PATENT SPECIFICATION

(11) **EP 2 948 660 B1**
(45) Date of publication and mention of the grant of the patent: **26.08.2020**
(21) Application number: 14714327.5
(22) Date of filing: 23.01.2014
(51) Int. Cl.: F02C 9/28, F23N 5/10, F23R 3/60

(54) **GAS TURBINE PLANT FOR ELECTRIC ENERGY PRODUCTION AND METHOD FOR OPERATING SAID PLANT**
GASTURBINENANLAGE ZUR STROMERZEUGUNG UND VERFAHREN ZUM BETREIBEN DIESER ANLAGE
CENTRALE ÉLECTRIQUE À TURBINE À GAZ POUR LA PRODUCTION D'ÉNERGIE ÉLECTRIQUE ET PROCÉDÉ D'ACTIONNEMENT DE LADITE CENTRALE

(30) Priority: 23.01.2013 IT MI20130089
(43) Date of publication of application: 02.12.2015
(73) Proprietor: Ansaldo Energia S.p.A., Genova (IT)
(72) Inventor: FUCILE, Giuseppe, I-16166 Genova (IT); MANTERO, Marco, I-16129 Genova (IT); RATTO, Christian, I-16159 Genova (IT); ZITO, Domenico, I-16154 Genova (IT)
(74) Representative: Andreotti, Erika
(86) International application number: PCT/IB2014/058503
(87) International publication number: WO 2014/115105

(56) References cited:
- EP-A1- 1 473 517
- EP-A1- 2 341 287
- EP-A1- 2 385 233

## Description

### TECHNICAL FIELD

The present invention relates to a gas turbine plant for electric energy production and to a method for operating said plant.

### BACKGROUND ART

Gas turbine plants are known comprising a compressor, a combustion chamber and a turbine. The compressor is configured to intake air, compress it and send it to the combustion chamber. The combustion of the fuel and of the air from the compressor occurs in the combustion chamber. The flue gases are exhausted into the turbine and expanded by the turbine, thus generating mechanical power. The mechanical power generated serves in part to drag the compressor and in part to generate electric energy by means of an alternator.

This type of plants generally comprises a control device, which is configured to regulate a plurality of parameters of the plant.

However, often controlling such parameters is not sufficient to obtain optimal plant performance. For example, the control device in known plants is usually configured to control variables which are not directly correlated with the dynamics of the combustion.

Thereby, the quality of the combustion cannot be monitored adequately in order to ensure the needed stability required to operate the plant. Accordingly, the stability of the combustion process cannot be ensured under all operating conditions of the plant, with undeniable effects on plant performance and accordingly, on plant profitability. A solution is disclosed in document EP 2385233 A1. However, this solution is not able to monitor adequately the dynamics of combustion inside the combustion chamber.

### DISCLOSURE OF INVENTION

It is one object of the present invention to make a gas turbine plant for electric energy production which does not have the drawbacks of known art herein noted; in particular, it is one object of the invention to make a gas turbine plant which allows to overcome the above-mentioned drawbacks in a simple and affordable manner, both from a functional and a constructional viewpoint.

In accordance with such objects, the present invention relates to gas turbine plant according to claim 1.

Thereby, the plant according to the present invention is capable of monitoring the dynamics inside the combustion chamber and, accordingly, of increasing both the reliability and the stability of the combustion process with undeniable advantages in terms of plant performance and profitability.

It is a further object of the present invention to provide a method for operating a gas turbine plant which allows to overcome the drawbacks of known art in a simple and affordable manner.

In accordance with such objects, the present invention relates to a method for operating a plant according to claim 12.

### BRIEF DESCRIPTION OF THE DRAWINGS

Further features and advantages of the present invention will become more apparent from the following description of a non-limiting embodiment thereof, with reference to the figures of the accompanying drawings, in which:
- figure 1 is a diagrammatic representation of a gas turbine plant according to the present invention;
- figure 2 is a detail of the plant in figure 1;
- figure 3 is a perspective view on enlarged scale of the detail in figure 2;
- figure 4 is a block diagram related to a detail of the plant in figure 1.

### BEST MODE FOR CARRYING OUT THE INVENTION

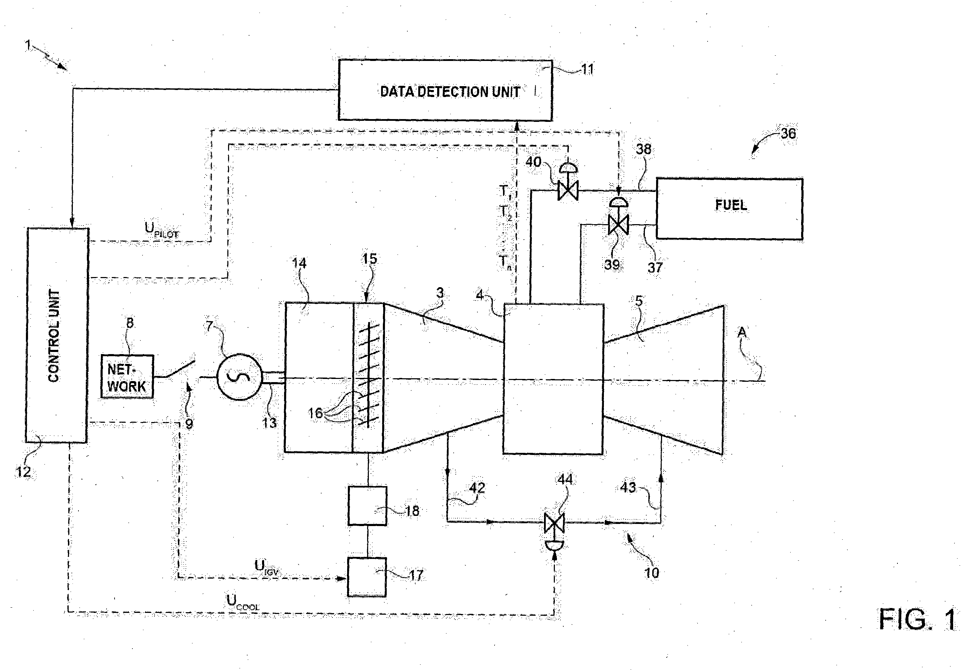

Numeral 1 in figure 1 indicates a plant for electric energy production comprising a compressor 3, a combustion chamber 4, a gas turbine 5 and a generator 7, which transforms the mechanical power supplied by turbine 5 into electric power to be supplied to an electric network 8 connected to generator 7 by means of a switch 9.

Plant 1 is also provided with a cooling circuit 10, a data detection unit 11, which is configured to detect a plurality of parameters of plant 1, and with a control unit 12.

A variant which is not illustrated provides that plant 1 is of the combined-cycle type and in addition to comprising the gas turbine 5 and generator 7, it also comprises a steam turbo assembly.

The gas turbine 5 extends along a longitudinal axis A and is provided with a shaft 13 (it also extending along axis A) to which compressor 3 and generator 7 are also connected.

Compressor 3 is preferably a multi-step axial compressor. In particular, compressor 3 extends along axis A and comprises an air intake 14 and an inlet stage 15 with variable geometry. The inlet stage 15 comprises a plurality of inlet guide vanes 16 (diagrammatically shown in figure 1), commonly called IGV (Inlet Guide Vane), whose tilt may be changed to regulate a flow rate of air drawn in from compressor 3.

In particular, the inlet guide vanes 16 are coupled at the ends to an inner ring and to an outer ring (not shown for simplicity in the accompanying figures), respectively, which are centred on axis A. The inlet guide vanes 16 are arranged equidistant from each other.

The tilt of the plurality of inlet guide vanes 16 is regulated by an actuator 17, which is controlled by the control unit 12.

The actuator 17 is preferably a hydraulic actuator supplied with an operating fluid. Actuator 17 is connected to the plurality of inlet guide vanes 16 to move them in a plurality of positions between a closed position, in which the inlet guide vanes 16 are oriented so that the flow of air entering compressor 3 is minimum, and an open position, in which the inlet guide vanes 16 are oriented so that the flow of air entering compressor 3 is maximum.

In particular, actuator 17 is connected to the plurality of inlet guide vanes 16 by means of a device 18 for transmitting motion, which comprises kinematic motions adapted to transmit the motion of actuator 17 to the inlet guide vanes 16.

The operating fluid is preferably oil, for example hydraulic oil from a tank (not shown) of plant 1.

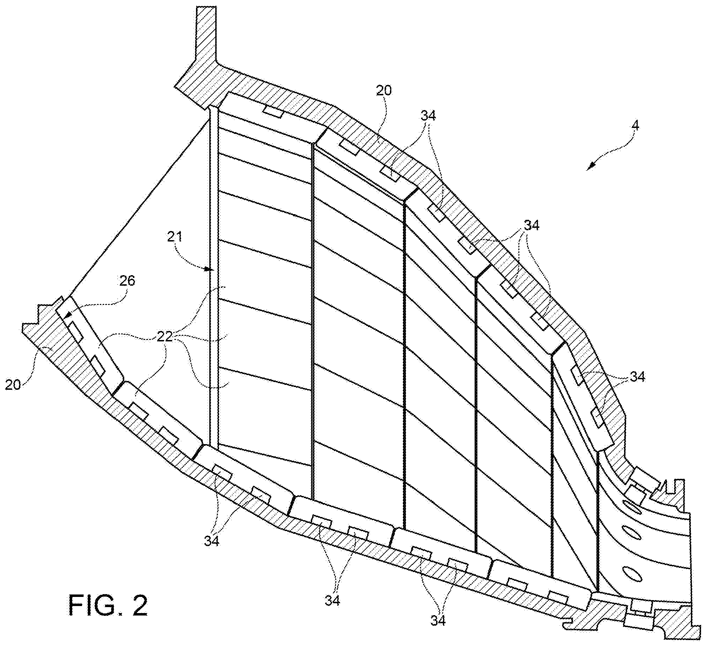

With reference to figure 2, the combustion chamber 4 is provided with a casing 20, which defines an area in which the combustion occurs.

Preferably, the combustion chamber 4 is of annular type and has a substantially toroidal shape.

Casing 20 has a substantially annular shape and is provided with an inner coating 21, defined by a plurality of tiles 22 made of refractory material, which are arranged in adjacent columns.

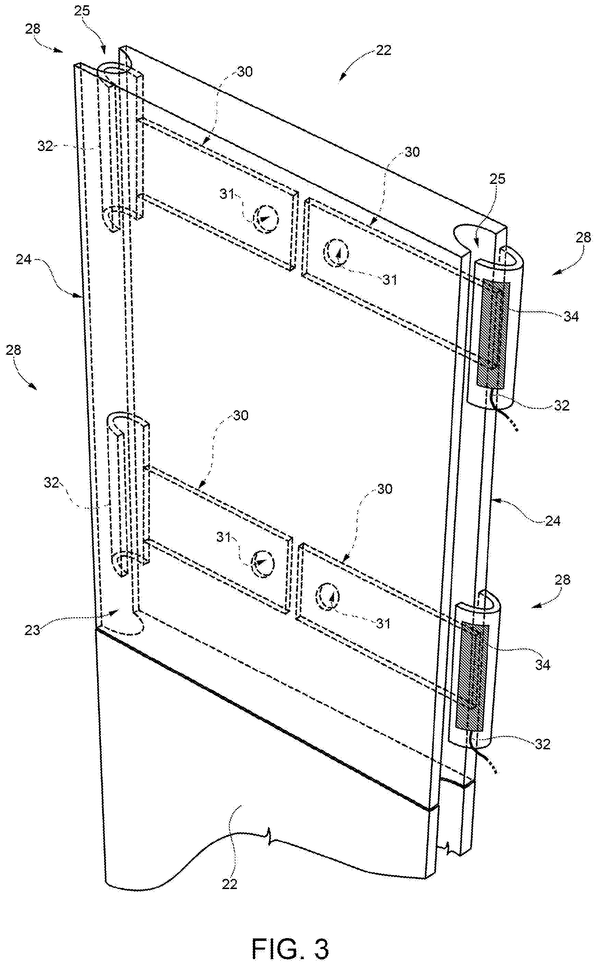

With reference to figure 3, the tiles 22 have a quadrangular shape and have a main face 23, which is facing, in use, towards the inside of the combustion chamber 4, and two opposite lateral faces 24, which are provided with a groove 25, respectively.

The tiles 22 are fixed to an inner face 26 (shown in figure 2) of casing 20 by means of coupling elements 28. In the non-limiting example described and shown herein, each tile 22 is fixed to the inner face 26 of casing 20 by means of four coupling elements 28.

Each coupling element 28 is fixed to the inner face 26 of casing 20 and to the respective tile 22.

In particular, each coupling element 28 comprises a plate 30 provided, at a first end, with a fixing hole 31 for fixing to the inner face 26 and, at a second end, with a fin 32 with a substantially U-shaped section.

Plate 30 is fixed to the inner face 26 so that, in use, fin 32 protrudes from the respective tile 22 and engages the respective groove 24 of tile 22.

With reference to figure 2, the combustion chamber 4 is also provided with a plurality of heat-sensitive elements 34 arranged along the walls of the combustion chamber 4, which are configured to detect a plurality of temperature data T1, T2... Tn.

The heat-sensitive elements 34 are arranged along at least a part of one or more generatrixes of the toroidal combustion chamber 4.

With reference to figure 3, the heat-sensitive elements 34 are coupled to the coupling elements 28 arranged along the generatrix.

In particular, the heat-sensitive elements 34 are fixed to the outer surface of the fins 32 of the coupling elements 28 arranged along the generatrix. Thereby, the temperature in combustion chamber associated with the shape and position of the flame, is detected more precisely.

Variants not forming part of the claimed invention provide that the heat-sensitive elements 34 be fixed to the inner face 26 of casing 20, or directly to the ceramic tiles 22. The heat sensitive elements may also be coupled to the plates 30 of the coupling elements 28.

The temperature data T1, T2... Tn detected by the heat-sensitive elements 34 are sent to the control unit 12, which, as will be seen in detail below, regulates certain parameters of plant 1 on the basis of such temperature data.

In the non-limiting example described and shown herein, the heat-sensitive elements 34 are defined by thermocouples.

With reference to figure 1, the combustion chamber 4 is also provided with a fuel supplying circuit 36, which comprises at least a pilot supplying line 37 and a main supplying line 38, each of which supplies a respective collector (not shown for simplicity in the accompanying figures) of the combustion chamber 4 in turn connected to a plurality of burners (also not shown for simplicity).

The pilot supplying line 37 is provided with a pilot regulating valve 39, which is controlled by the control unit 12, as will be seen in detail below.

The main supplying line 38 is provided with a main regulating valve 40, which is controlled by the control unit 12, as will be seen in detail below.

The cooling circuit 10 comprises a line 42 for extracting air, a line 43 for supplying air 43 and at least a cooling regulating valve 44.

The air extraction line 42 is configured to draw at least a flow of compressed air from compressor 3 and to supply it to the air supplying line 43.

The air supplying line 43 is configured to inject the flow of air drawn from compressor 3 into the gas turbine 5. The flow rate of air drawn from compressor 3 and injected into the gas turbine 5 is regulated by the cooling regulating valve 44, which is controlled by the control unit 12, as will be seen in detail below.

The data detection unit 11 comprises a plurality of sensors (not shown for simplicity in the accompanying figures) configured to detect a plurality of parameters related to plant 1 to be supplied to the control unit 12; in particular, the data detection unit 11 detects the following parameters:
- position of the inlet guide vanes 16 of compressor 3;
- power supplied by the gas turbo assembly or from inside plant 1 when plant 1 is of the combined cycle type and has a single shaft;
- calorific power of the fuel;
- composition of the fuel supplied;
- temperature of the fuel;
- temperature and intake pressure of compressor 3;
- ambient conditions (atmospheric temperature and pressure, relative humidity);
- gradient of variation of the power supplied;
- direction of variation of the power supplied (increase or decrease in power);
- TETC temperature of the gases at the exhaust of the gas turbine 5.

The data detection unit 11 supplies the control unit 12 with the signals related to the magnitudes detected.

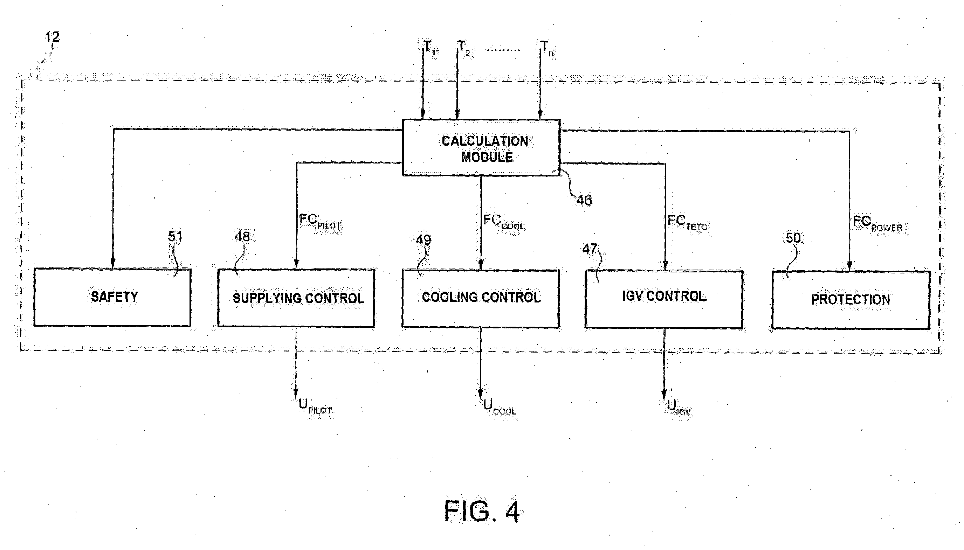

With reference to figure 4, the control unit 12 comprises a calculation module 46, at least an IGV control module 47, a fuel supplying control module 48, a cooling control module 49, a protection module 50 and a safety module 51.

The calculation module 46 is configured to calculate at least a correction factor FC on the basis of the temperature values T1, T2... Tn detected by the plurality of heat-sensitive elements 34. Such a correction factor FC is employed in the control of the parameters of plant 1, so that the control of the parameters of plant 1 considers the distribution of temperature inside the combustion chamber 4.

Preferably, the calculation module 46 is configured to calculate a plurality of correction factors which will be employed in the control of a respective plurality of parameters of plant 1.

In the non-limiting example described and shown herein, the control module 46 is configured to calculate the following correction factors:
- a correction factor of the temperature set point at the exhaust of the gas turbine FCtetc which will be supplied to the IGV control module 47;
- a correction factor of the power set point FCpower which will be supplied to the protection module 50;
- a correction factor of the position set point of the cooling regulating valve FCcool which will be supplied to the cooling control module 49;
- a correction factor of the pilot flow rate set point FCpilot which will be supplied to the supplying control module 48.

The calculation module 46 is configured to calculate the above-listed correction factors on the basis of the values T1, T2... Tn. Preferably, the calculation module 46 is configured to calculate the above-listed correction factors on the basis of a suitable function of the values T1, T2... Tn with parameters that can be regulated on the basis of the type of machine in use.

The IGV control module 47 is configured to regulate the position IGVpos of the inlet guide vanes 16 on the basis of a reference value SPtetc of the temperature at the exhaust of turbine 5.

In particular, the IGV control module 47 is configured to send a control signal UIGV to actuator 17.

Normally the reference value SPtetc is generally calculated on the basis of a desired power value of plant 1 and on the basis of the ambient conditions.

When the correction factor FCtetc calculated by the calculation module 46 is greater or less than a threshold value, the reference value SPtetc is corrected by applying the correction factor FCtetc, which is in turn a function of the temperature values T1, T2... Tn detected by the plurality of heat-sensitive elements 34.

The fuel supplying control module 48 is configured to regulate the position of the pilot regulating valve 39 on the basis of a reference value SPpilot of the valve position such as to supply a desired pilot fuel flow rate.

When the correction factor FCpilot calculated by the calculation module 46 is greater or less than a threshold value, the reference value SPpilot of the valve position is corrected by applying the correction factor of the pilot flow rate set point FCpilot, which is in turn a function of the temperature values T1, T2... Tn detected by the plurality of heat-sensitive elements 34.

The cooling control module 49 is configured to regulate the opening of the cooling regulating valve 44 on the basis of a reference value SPcool of the valve position such as to draw a desired pilot air flow rate from compressor 3.

When the correction factor of the cooling regulating valve FCcool calculated by the calculation module 46 is greater or less than a threshold value, the reference value SPcool of the position of the cooling regulating valve 44 is corrected by applying the correction factor of the position of the cooling regulating valve FCcool, which is in turn a function of the temperature values T1, T2... Tn detected by the plurality of heat-sensitive elements 34.

The protection module 50 is configured to change the reference power value SPpower normally used to operate plant 1 so as to prevent the gas turbine 5 from being subjected to sudden service interruptions due to combustion instability. In particular, the protection module 50 is configured to subtract a function contribution of the correction factor FCpower calculated by the calculation module 46, from the power reference value SPpower.

The safety module 51 is configured to monitor the temperature values T1, T2... Tn detected by the heat-sensitive elements 34 and give rise to an alarm signal when at least one of the temperature values exceeds a predefined threshold value Tmax.

Advantageously, the plant according to the present invention comprises a plurality of heat-sensitive elements 34 which are capable of monitoring the flame conditions inside the combustion chamber 4. The values collected by the heat-sensitive elements 34, which are conveniently processed according to a suitable function, allow the control of plant 1 by the control unit 12, to be made more efficient.

Due to the fact that the control unit 12 considers the temperature profile in the combustion chamber 4 to regulate at least a parameter of plant 1, plant 1 is more reliable and performing. Indeed, the guarantee of increased combustion stability allows the gas turbine assembly to be operated more efficiently and with increased performance both at intermediate and low loads. In addition, it is possible to increase the flexibility of the plant both in terms of managing the variability of gas composition and of the opportunity to increase the variation gradient of the load delivered. When combined, these effects generate increased plant profitability and, accordingly, a significant economic benefit for clients.

Finally, it is apparent that modifications and variants may be made to the plant and the method herein described without departing from the scope of the accompanying claims.

## Claims

1. Gas turbine plant (1) for electric energy production comprising:
a gas turbine (5);
a compressor (3);
a combustion chamber (4) comprising a casing (20), which defines an area wherein the combustion occurs and is provided with an inner coating (21) defined by a plurality of tiles (22) coupled to the casing (20) by means of coupling elements (28);
a plurality of heat-sensitive elements (34) configured to detect a plurality of temperature values (T(1), T(2)... Tn) inside the combustion chamber (4);
a control unit (12) configured to regulate at least a first parameter (PILOTpos; IGVpos; COOLpos; SPpower) of the plant (1) on the basis of the temperature values (T1, T2... Tn) detected by the plurality of heat-sensitive elements (34); wherein the combustion chamber (4) has a substantially toroidal shape;
the heat-sensitive elements (34) being arranged along at least a part of one or more generatrix of the toroidal combustion chamber (4)and being coupled to at least one coupling element (28).

2. Plant according to claim 1, wherein the heat-sensitive elements (34) are arranged along the walls of the combustion chamber (4).

3. Plant according to anyone of the foregoing claims, wherein each coupling element (28) comprises a plate (30), which is fixed, in use, to the casing (20), and a fin (32), which engages, in use, a respective groove (24) of the tile (22); the heat-sensitive elements (34) being coupled to at least a fin (32) of the respective coupling element (28).

4. Plant according to anyone of the foregoing claims, wherein the compressor (3) comprises an inlet stage (15) provided with a plurality of inlet guide vanes (16); the control unit (12) being configured to regulate at least the position (IGVpos) of the inlet guide vanes (16) on the basis of the temperature values (T1, T2... Tn) detected by the plurality of heat-sensitive elements (34).

5. Plant according to claim 4, wherein the control unit (12) is configured to regulate the position (IGVpos) of the inlet guide vanes (16) on the basis of a first reference value (SPtetc) of the temperature at the exhaust of the turbine (5); the control unit (12) being configured to correct the first reference value (SPtetc) by applying a first correction factor (FCtetc) calculated on the basis of the temperature values (T1, T2... Tn) detected by the heat-sensitive elements (34).

6. Plant according to anyone of the foregoing claims, wherein the combustion chamber (4) is provided with a fuel supplying circuit (36) provided with a pilot supplying line (37) and a pilot regulation valve (39), whose position regulates the pilot fuel flow rate supplied to the combustion chamber (4); the control unit (12) being configured to regulate at least the position (PILOTpos) of the pilot regulation valve (39) on the basis of the temperature values (T1, T2... Tn) detected by the plurality of heat-sensitive elements (34).

7. Plant according to claim 6, wherein the control unit (12) is configured to regulate the position of the pilot regulation valve (39) on the basis of a second reference value (SPpilot), at which a desired pilot fuel rate is supplied to the combustion chamber (4); the control unit (12) being configured to correct the second reference value (SPpilot) by applying a second correction factor (FCpilot) calculated on the basis of the temperature values (T1, T2... Tn) detected by the plurality of heat-sensitive elements (34).

8. Plant according to anyone of the foregoing claims, comprising a cooling circuit (10) configured to draw air from the compressor (3) and inject the drawn air into the gas turbine (5) and provided with a cooling regulating valve (44), whose position regulates the air flow drawn from the compressor (3) ; the control unit (12) being configured to regulate at least the position (COOLpos) of the cooling regulating valve (44) on the basis of the temperature values (T1, T2... Tn) detected by the plurality of heat-sensitive elements (34).

9. Plant according to claim 8, wherein the control unit (12) is configured to regulate the position of the cooling regulating valve (44) on the basis of a third reference value (SPcool), at which a desired flow rate of air is drawn from the compressor (3); the control unit (12) being configured to correct the third reference value (SPcool) by applying a third correction factor (FCcool) calculated on the basis of the temperature values (T1, T2... Tn) detected by the plurality of heat-sensitive elements (34) .

10. Plant according to anyone of the foregoing claims, wherein the control unit (12) is configured to modify a power reference value (SPpower) on the basis of the temperature values (T1, T2... Tn) detected by the plurality of heat-sensitive elements (34).

11. Plant according to anyone of the foregoing claims, wherein the control unit (12) is configured to monitor the temperature values (T1, T2... Tn) detected by the heat-sensitive elements (34) and give rise to an alarm signal when at least one of the temperature values (T1, T2... Tn) exceeds a predefined threshold value (Tmax).

12. Method for operating a gas turbine plant (1) for electric energy production provided with a gas turbine (5), a compressor (3) and a combustion chamber (4); the combustion chamber (4) comprising a casing (20), which defines an area wherein the combustion occurs and is provided with an inner coating (21) defined by a plurality of tiles (22) coupled to the casing (20) by means of coupling elements (28);
the method comprising the steps of:
- detecting a plurality of temperature values (T1, T2... Tn) inside the combustion chamber (4) by means of a plurality of heat-sensitive elements (34);
- regulating at least a first parameter (PILOTpos; IGVpos; COOLpos; SPpower) of the plant (1) on the basis of the temperature values (T1, T2... Tn) detected by the plurality of heat-sensitive elements (34); wherein the combustion chamber (4) has a substantially toroidal shape; the heat-sensitive elements (34) being arranged along at least a part of one or more generatrix of the toroidal combustion chamber (4); and being coupled to at least one coupling element (28).

13. Method according to claim 12, wherein the heat-sensitive elements (34) are arranged along the walls of the combustion chamber (4).

14. Method according to claim 12 or 13, wherein the compressor (3) comprises an inlet stage (15) provided with a plurality of inlet guide vanes (16); the step of regulating at least a first parameter (PILOTpos; IGVpos; COOLpos; SPpower) of the plant (1) on the basis of the temperature values (T1, T2... Tn) detected by the plurality of heat-sensitive elements (34) comprising the step of regulating at least the position (IGVpos) of the inlet guide vanes (16) on the basis of the temperature values (T1, T2... Tn) detected by the plurality of heat-sensitive elements (34).

15. Method according to claim 14, wherein the step of regulating at least the position (IGVpos) of the inlet guide vanes (16) comprises the steps of:
- regulating the position (IGVpos) of the inlet guide vanes (16) on the basis of a first reference value (SPtetc) of the temperature at the exhaust of the turbine (5);
- correcting the first reference value (SPtetc) by applying a first correction factor (FCtetc) calculated on the basis of the temperature values (T1, T2... Tn) detected by the plurality of heat-sensitive elements (34) .

16. Method according to any one of claims from 12 to 15, wherein the combustion chamber (4) is provided with a fuel supplying circuit (36) provided with a pilot supplying line (37) and a pilot regulation valve (39) whose position regulates the pilot fuel flow rate supplied to the combustion chamber (4); the step of regulating at least a first parameter (PILOTpos; IGVpos; COOLpos; SPpower) of the plant (1) on the basis of the temperature values (T1, T2... Tn) detected by the plurality of heat-sensitive elements (34) comprising the step of regulating at least the position (PILOTpos) of the pilot regulation valve (39) on the basis of the temperature values (T1, T2... Tn) detected by the plurality of heat-sensitive elements (34).

17. Method according to claim 16, wherein the step of regulating at least the position (PILOTpos) of the pilot regulating valve (39) comprises the steps of:
- regulating the position of the pilot regulating valve (39) on the basis of a second reference value (SPpilot), at which a desired pilot fuel flow rate is supplied to the combustion chamber (4);
- correcting the second reference value (SPpilot) by applying a second correction factor (FCpilot) calculated on the basis of the temperature values (T1, T2... Tn) detected by the plurality of heat-sensitive elements (34).

18. Method according to any one of claims from 12 to 17, comprising a cooling circuit (10) configured to draw air from the compressor (3) and inject the drawn air into the gas turbine (5) and provided with a cooling regulating valve (44), whose position regulates the air flow drawn from the compressor (3); the step of regulating at least a first parameter (PILOTpos; IGVpos; COOLpos; SPpower) of the plant (1) on the basis of the temperature values (T1, T2... Tn) detected by the plurality of heat-sensitive elements (34) comprising the step of regulating at least the position (COOLpos) of the cooling regulating valve (44) on the basis of the temperature values (T1, T2... Tn) detected by the plurality of heat-sensitive elements (34).

19. Method according to claim 18, wherein the step of regulating at least the position (COOLpos) of the cooling regulating valve (44) comprises the steps of:
- regulating the position of the cooling regulating valve (44) on the basis of a third reference value (SPcool), at which a desired air flow rate is drawn from the compressor (3);
- correcting the third reference value (SPcool) by applying a third correction factor (FCcool) calculated on the basis of the temperature values (T1, T2... Tn) detected by the plurality of heat-sensitive elements (34) .

20. Method according to any one of claims from 12 to 19, comprising the step of changing a power reference value (SPpower) on the basis of the temperature values (T1, T2... Tn) detected by the plurality of heat-sensitive elements (34) .

21. Method according to any one of claims from 12 to 20, comprising the step of monitoring the temperature values (T1, T2... Tn) detected by the heat-sensitive elements (34) and giving rise to an alarm signal when at least one of the temperature values (T1, T2... Tn) exceeds a predefined threshold value (Tmax).

## Patentansprüche

1. Gasturbinenanlage (1) zur Erzeugung elektrischer Energie bestehend aus:
einer Gasturbine (5);
einem Verdichter (3);
einer Brennkammer (4) mit einem Gehäuse (20), das einen Bereich definiert, in dem die Verbrennung stattfindet, und das mit einer inneren Beschichtung (21) versehen ist, die durch eine Vielzahl von Platten (22) definiert ist, die mit dem Gehäuse (20) mittels Verbindungselementen (28) verbunden sind;
eine Vielzahl von wärmeempfindlichen Elementen (34), die so konfiguriert sind, dass sie eine Vielzahl von Temperaturwerten (T (1), T (2) ... Tn) innerhalb der Brennkammer (4) erfassen;
einer Steuereinheit (12), die so konfiguriert ist, dass sie mindestens einen ersten Parameter (PILOTpos; IGVpos; COOLpos; SPpower) der Anlage (1) auf der Basis der Temperaturwerte (T1, T2 ... Tn) regelt, die von der Vielzahl wärmeempfindlicher Elemente (34) erfasst werden;
wobei die Brennkammer (4) eine im Wesentlichen ringförmige Form aufweist;
wobei die wärmeempfindlichen Elemente (34) entlang mindestens eines Teils einer oder mehrerer Erzeugenden der toroidförmigen Brennkammer (4) angeordnet und mit mindestens einem Kopplungselement (28) gekoppelt sind.

2. Anlage nach Anspruch 1, wobei die wärmeempfindlichen Elemente (34) entlang der Wände der Brennkammer (4) angeordnet sind.

3. Anlage nach einem der vorstehenden Ansprüche, wobei jedes Kopplungselement (28) aufweist eine Platte (30), die im Gebrauch am Gehäuse (20) befestigt ist, und eine Rippe (32), die im Gebrauch in eine entsprechende Nut (24) der Platte (22) eingreift; wobei die wärmeempfindlichen Elemente (34) mit mindestens einer Rippe (32) des entsprechenden Kopplungselements (28) verbunden sind.

4. Anlage nach einem der vorstehenden Ansprüche, wobei der Kompressor (3) eine Einlaßstufe (15) umfaßt, die mit einer Vielzahl von Einlaßleitschaufeln (16) versehen ist; wobei die Steuereinheit (12) so konfiguriert ist, daß sie zumindest die Position (IGVpos) der Einlaßleitschaufeln (16) auf der Grundlage der von der Vielzahl wärmeempfindlicher Elemente (34) erfaßten Temperaturwerte (T1, T2 ... Tn) regelt.

5. Anlage nach Anspruch 4, wobei die Steuereinheit (12) so konfiguriert ist, dass sie die Position (IGVpos) der Einlassleitschaufeln (16) auf der Basis eines ersten Referenzwertes (SPtetc) der Temperatur am Auslass der Turbine (5) regelt; wobei die Steuereinheit (12) so konfiguriert ist, dass sie den ersten Referenzwert (SPtetc) durch Anwendung eines ersten Korrekturfaktors (FCtetc) korrigiert, der auf der Basis der von den wärmeempfindlichen Elementen (34) erfassten Temperaturwerte (T1, T2 ... Tn) berechnet wird.

6. Anlage nach einer der vorstehenden Ansprüche, bei der die Brennkammer (4) mit einem Brennstoffzufuhrkreislauf (36) versehen ist, der mit einer Pilotzufuhrleitung (37) und einem Pilotregelventil (39) versehen ist, dessen Position den Pilotbrennstoffdurchsatz regelt, die der Brennkammer (4) zugeführt wird; wobei die Steuereinheit (12) so konfiguriert ist, dass sie zumindest die Position (PILOTpos) des Pilotregelventils (39) auf der Grundlage der Temperaturwerte (T1, T2 ... Tn) regelt, die von der Vielzahl wärmeempfindlicher Elemente (34) erfasst werden.

7. Anlage nach Anspruch 6, bei der die Steuereinheit (12) so konfiguriert ist, dass sie die Position des Vorsteuerventils (39), bei der ein gewünschter Vorsteuer-Brennstoffdurchsatz der Brennkammer (4) zugeführt wird, auf der Grundlage eines zweiten Referenzwertes (SPpilot) regelt; wobei die Steuereinheit (12) so konfiguriert ist, dass sie den zweiten Referenzwert (SPpilot) durch Anwendung eines zweiten Korrekturfaktors (FCpilot) korrigiert, der auf der Grundlage der Temperaturwerte (T1, T2 ... Tn) berechnet wird, die von der Vielzahl wärmeempfindlicher Elemente (34) erfasst werden.

8. Anlage nach einem der vorstehenden Ansprüche, die einen Kühlkreislauf (10) umfasst, der so konfiguriert ist, dass er Luft aus dem Kompressor (3) ansaugt und die angesaugte Luft in die Gasturbine (5) einbläst, und der mit einem Kühlregelventil (44) versehen ist, dessen Position den aus dem Kompressor (3) angesaugten Luftstrom regelt; wobei die Steuereinheit (12) so konfiguriert ist, dass sie zumindest die Position (COOLpos) des Kühlregelventils (44) auf der Grundlage der Temperaturwerte (T1, T2 ... Tn) regelt, die von der Mehrzahl von 5 wärmeempfindlichen Elementen (34) erfasst werden.

9. Anlage nach Anspruch 8, bei der die Steuereinheit (12) so konfiguriert ist, dass sie die Position des Kühlungsregelventils (44) auf der Basis eines dritten Referenzwertes (SPcool) regelt, bei dem ein gewünschter Luftstrom aus dem Kompressor (3) angesaugt wird; wobei die Steuereinheit (12) so konfiguriert ist, dass sie den dritten Referenzwert (SPcool) korrigiert, indem sie einen dritten Korrekturfaktor (FCcool) anwendet, der auf der Basis der Temperaturwerte (T1, T2 ... Tn) berechnet wird, die von der Mehrzahl von wärmeempfindlichen Elementen (34) erfasst werden.

10. Anlage nach einem der vorstehenden Ansprüche, wobei die Steuereinheit (12) so konfiguriert ist, dass sie einen Leistungsreferenzwert (SPpower) auf der Grundlage der von der Vielzahl wärmeempfindlicher Elemente (34) erfassten Temperaturwerte (T1, T2 ... Tn) modifiziert.

11. Anlage nach einem der vorstehenden Ansprüche, wobei die Steuereinheit (12) so konfiguriert ist, dass sie die von den wärmeempfindlichen Elementen (34) erfassten Temperaturwerte (T1, T2 ... Tn) überwacht und ein Alarmsignal auslöst, wenn mindestens einer der Temperaturwerte (T1, T2 ... Tn) einen vordefinierten Grenzwert (Tmax) überschreitet.

12. Verfahren zum Betreiben einer Gasturbinenanlage (1) zur Erzeugung elektrischer Energie, die mit einer Gasturbine (5), einem Kompressor (3) und einer Brennkammer (4) versehen ist; wobei die Brennkammer (4) ein Gehäuse (20) umfasst, das einen Bereich definiert, in dem die Verbrennung stattfindet, und mit einer inneren Beschichtung (21) versehen ist, die durch eine Vielzahl von Platten (22) definiert ist, die mit dem Gehäuse (20) mittels Kopplungselementen (28) gekoppelt sind; wobei das Verfahren die folgenden Schritte umfasst
- Erfassen einer Vielzahl von Temperaturwerten (T1, T2 ... Tn) innerhalb der Brennkammer (4) mittels einer Vielzahl von wärmeempfindlichen Elementen (34);
- Regulieren mindestens eines ersten Parameters (PILOTpos; IGVpos; COOLpos; SPpower) der Anlage (1) auf der Basis der von der Vielzahl wärmeempfindlicher Elemente (34) erfassten Temperaturwerte (T1, T2 ... Tn);
wobei die Brennkammer (4) eine im wesentlichen toroidale Form hat; die wärmeempfindlichen Elemente (34) entlang mindestens eines Teils einer oder mehrerer Erzeugenden der toroidalen Brennkammer (4) angeordnet sind; und mit mindestens einem Kopplungselement (28) gekoppelt sind.

13. Verfahren nach Anspruch 12, wobei die wärmeempfindlichen Elemente (34) entlang der Wände der Brennkammer (4) angeordnet sind.

14. Verfahren nach Anspruch 12 oder 13, wobei der Verdichter (3) eine Einlassstufe (15) umfasst, die mit einer Vielzahl von Einlassleitschaufeln (16) versehen ist; wobei der Schritt der Regulierung mindestens eines ersten Parameters (PILOTpos; IGVpos; COOLpos; SPpower) der Anlage (1) auf der Basis der Temperaturwerte (T1, T2 .... Tn), die von der Vielzahl wärmeempfindlicher Elemente (34) erfasst werden, den Schritt des Regulierens mindestens der Position (IGVpos) der Einlassleitschaufeln (16) umfasst auf der Basis der Temperaturwerte (T1, T2 ... Tn), die von der Vielzahl wärmeempfindlicher Elemente (34) erfasst werden.

15. Verfahren nach Anspruch 14, wobei der Schritt des Regulierens zumindest der Position (IGVpos) der Einlassleitschaufeln (16) die folgenden Schritte umfasst:
- Regulieren der Position (IGVpos) der Einlassleitschaufeln (16) auf der Grundlage eines ersten Referenzwertes (SPtetc) der Temperatur am Auslass der Turbine (5);
- Korrigieren des ersten Referenzwertes (SPtetc) durch Anwendung eines ersten Korrekturfaktors (FCtetc), der auf der Grundlage der von der Mehrzahl wärmeempfindlicher Elemente (34) erfaßten Temperaturwerte (T1, T2 ... Tn) berechnet wird.

16. Verfahren nach einem der Ansprüche 12 bis 15, bei dem die Brennkammer (4) mit einem Brennstoffversorgungskreislauf (36) versehen ist, der mit einer Pilotversorgungsleitung (37) und einem Pilotregelventil (39) versehen ist, dessen Position den Pilotbrennstoffdurchsatz regelt, der der Brennkammer (4) zugeführt wird; wobei der Schritt der Regelung mindestens eines ersten Parameters (PILOTpos; IGVpos; COOLpos; SPpower) der Anlage (1) auf der Grundlage der Temperaturwerte (T1, T2 . ... Tn), die von der Vielzahl wärmeempfindlicher Elemente (34) erfaßt werden, umfassend den Schritt des Regulierens wenigstens der Position (PILOTpos) des Vorsteuerventils (39) auf der Basis der von der Vielzahl wärmeempfindlicher Elemente (34) erfaßten Temperaturwerte (T1, T2 ... Tn).

17. Verfahren nach Anspruch 16, wobei der Schritt des Regulierens zumindest der Position (PILOTpos) des Vorsteuerventils (39) die folgenden Schritte umfasst:
Regulieren der Position des Vorsteuerventils (39) auf der Basis eines zweiten Referenzwertes (SPpilot), bei dem eine gewünschte Vorsteuer-Kraftstoffdurchflussmenge der Brennkammer (4) zugeführt wird;
Korrigieren des zweiten Referenzwertes (SPpilot) durch Anwenden eines zweiten Korrekturfaktors (FCpilot), der auf der Grundlage der von der Mehrzahl von wärmeempfindlichen Elementen (34) erfaßten Temperaturwerte (T1, T2 ... Tn) berechnet wird.

18. Verfahren nach einem der Ansprüche 12 bis 17, umfassend einen Kühlkreislauf (10), der so konfiguriert ist, dass er Luft aus dem Kompressor (3) ansaugt und die angesaugte Luft in die Gasturbine (5) einbläst und mit einem Kühlungsregelventil (44) versehen ist, dessen Position den aus dem Kompressor (3) angesaugten Luftstrom regelt; wobei der Schritt der Regelung mindestens eines ersten Parameters (PILOTpos; IGVpos; COOLpos; SPpower) der Anlage (1) auf der Grundlage der Temperaturwerte (T1, T2 .... Tn), die von der Vielzahl wärmeempfindlicher Elemente (34) erfaßt werden, umfasst den Schritt des Regulierens wenigstens der Position (COOLpos) des Kühlungsregulierventils (44) auf der Basis der von der Vielzahl wärmeempfindlicher Elemente (34) erfaßten Temperaturwerte (T1, T2 ... Tn).

19. Verfahren nach Anspruch 18, wobei der Schritt des Regulierens zumindest der Position (COOLpos) des Kühlungsregulierventils (44) die folgenden Schritte umfasst:
- Regeln der Position des Kühlungsregelventils (44) auf der Basis eines dritten Referenzwertes (SPcool), bei dem eine gewünschte Luftdurchflussmenge aus dem Kompressor (3) entnommen wird;
- Korrigieren des dritten Referenzwertes (SPcool) durch Anwendung eines dritten Korrekturfaktors (FCcool), der auf der Grundlage der von der Vielzahl wärmeempfindlicher Elemente (34) erfaßten Temperaturwerte (T1, T2 ... Tn) berechnet wird.

20. Verfahren nach einem der Ansprüche 12 bis 19, umfassend den Schritt des Änderns eines Leistungsreferenzwertes (SPpower) auf der Grundlage der Temperaturwerte (T1, T2 ... Tn), die von der Vielzahl wärmeempfindlicher Elemente (34) erfaßt werden.

21. Verfahren nach einem der Ansprüche 12 bis 20, umfassend den Schritt des Überwachens der Temperaturwerte (T1, T2 ... Tn), die von den wärmeempfindlichen Elementen (34) erfasst werden und ein Alarmsignal auslösen, wenn mindestens einer der Temperaturwerte (T1, T2 ... Tn) einen vordefinierten Grenzwert (T+max) überschreitet.

## Revendications

1. Centrale électrique à turbine à gaz (1) destinée à produire de l'énergie électrique, comprenant :
une turbine à gaz (5) ;
un compresseur (3) ;
une chambre de combustion (4) comprenant une enveloppe (20), qui définit une zone où se produit la combustion, et qui est dotée d'un revêtement intérieur (21) défini par une pluralité de tuiles (22) couplées à l'enveloppe (20) au moyen d'éléments de couplage (28) ;
une pluralité d'éléments sensibles à la chaleur (34) configurés afin de détecter une pluralité de valeurs de température (T(1), T(2) ... Tn) à l'intérieur de la chambre de combustion (4) ;
une unité de commande (12) configurée afin de réguler un premier paramètre au moins (PILOTpos ; IGVpos ; COOLpos ; SPpower) de la centrale électrique (1) sur la base des valeurs de température (T1, T2 ... Tn) détectées par la pluralité d'éléments sensibles à la chaleur (34) ;
où la chambre de combustion (4) présente une forme sensiblement toroïdale ;
les éléments sensibles à la chaleur (34) étant agencés le long d'une partie au moins d'une ou de plusieurs génératrices de la chambre de combustion toroïdale (4) et étant couplés à un élément de couplage (28) au moins.

2. Centrale électrique selon la revendication 1, où les éléments sensibles à la chaleur (34) sont agencés le long des parois de la chambre de combustion (4).

3. Centrale électrique selon l'une quelconque des revendications précédentes, où chaque élément de couplage (28) comprend une plaque (30), qui est fixée, en service, sur l'enveloppe (20), et une ailette (32), qui vient en prise, en service, avec une rainure respective (24) de la tuile (22) ; les éléments sensibles à la chaleur (34) étant couplés à une ailette (32) au moins de l'élément de couplage respectif (28).

4. Centrale électrique selon l'une quelconque des revendications précédentes, où le compresseur (3) comprend un étage d'entrée (15) doté d'une pluralité d'ailettes de guidage d'entrée (16) ; l'unité de commande (12) étant configurée afin de réguler au moins la position (IGVpos) des ailettes de guidage d'entrée (16) sur la base des valeurs de température (T1, T2 ... Tn) détectées par la pluralité d'éléments sensibles à la chaleur (34).

5. Centrale électrique selon la revendication 4, où l'unité de commande (12) est configurée afin de réguler la position (IGVpos) des ailettes de guidage d'entrée (16) sur la base d'une première valeur de référence (SPtetc) de la température au niveau de l'échappement de la turbine (5) ; l'unité de commande (12) étant configurée afin de corriger la première valeur de référence (SPtetc) en appliquant un premier facteur de correction (FCtetc) calculé sur la base des valeurs de température (T1, T2 ... Tn) détectées par les éléments sensibles à la chaleur (34).

6. Centrale électrique selon l'une quelconque des revendications précédentes, où la chambre de combustion (4) est dotée d'un circuit d'approvisionnement en combustible (36) doté d'une canalisation d'approvisionnement pilote (37) et d'une soupape de régulation pilote (39), dont la position régule le débit pilote du combustible pilote fourni à la chambre de combustion (4) ; l'unité de commande (12) étant configurée afin de réguler au moins la position (PILOTpos) de la soupape de régulation pilote (39) sur la base des valeurs de température (T1, T2 ... Tn) détectées par la pluralité d'éléments sensibles à la chaleur (34).

7. Centrale électrique selon la revendication 6, où l'unité de commande (12) est configurée afin de réguler la position de la soupape de régulation pilote (39) sur la base d'une deuxième valeur de référence (SPpilot), pour laquelle un débit de combustible pilote souhaité est fourni à la chambre de combustion (4) ; l'unité de commande (12) étant configurée afin de corriger la deuxième valeur de référence (SPpilot) en appliquant un deuxième facteur de correction (FCpilot) calculé sur la base des valeurs de température (T1, T2 ... Tn) détectées par la pluralité d'éléments sensibles à la chaleur (34).

8. Centrale électrique selon l'une quelconque des revendications précédentes, comprenant un circuit de refroidissement (10) configuré afin d'extraire l'air du compresseur (3) et d'injecter l'air extrait dans la turbine à gaz (5), et doté d'une soupape de régulation de refroidissement (44), dont la position régule le flux d'air extrait du compresseur (3) ; l'unité de commande (12) étant configurée afin de réguler au moins la position (COOLpos) de la soupape de régulation de refroidissement (44) sur la base des valeurs de température (T1, T2 ... Tn) détectées par la pluralité d'éléments sensibles à la chaleur (34).

9. Centrale électrique selon la revendication 8, où l'unité de commande (12) est configurée afin de réguler la position de la soupape de régulation de refroidissement (44) sur la base d'une troisième valeur de référence (SPcool), pour laquelle un débit d'air souhaité est extrait du compresseur (3) ; l'unité de commande (12) étant configurée afin de corriger la troisième valeur de référence (SPcool) en appliquant un troisième facteur de correction (FCcool) calculé sur la base des valeurs de température (T1, T2 ... Tn) détectées par la pluralité d'éléments sensibles à la chaleur (34).

10. Centrale électrique selon l'une quelconque des revendications précédentes, où l'unité de commande (12) est configurée afin de modifier une valeur de référence de puissance (SPpower) sur la base des valeurs de température (T1, T2 ... Tn) détectées par la pluralité d'éléments sensibles à la chaleur (34).

11. Centrale électrique selon l'une quelconque des revendications précédentes, où l'unité de commande (12) est configurée afin de surveiller les valeurs de température (T1, T2 ... Tn) détectées par les éléments sensibles à la chaleur (34) et de déclencher un signal d'alarme lorsque l'une au moins des valeurs de température (T1, T2 ... Tn) dépasse une valeur de seuil prédéfinie (Tmax).

12. Procédé d'actionnement d'une centrale électrique à turbine à gaz (1) destinée à produire de l'énergie électrique, dotée d'une turbine à gaz (5), d'un compresseur (3) et d'une chambre de combustion (4) ; la chambre de combustion (4) comprenant une enveloppe (20), qui définit une zone où se produit la combustion, et qui est dotée d'un revêtement intérieur (21) défini par une pluralité de tuiles (22) couplées à l'enveloppe (20) au moyen d'éléments de couplage (28) ;
le procédé comprenant les étapes suivantes consistant à :
- détecter une pluralité de valeurs de température (T1, T2 ... Tn) à l'intérieur de la chambre de combustion (4) au moyen d'une pluralité d'éléments sensibles à la chaleur (34) ;
- réguler un premier paramètre au moins (PILOTpos ; IGVpos ; COOLpos ; SPpower) de la centrale électrique (1) sur la base des valeurs de température (T1, T2 ... Tn) détectées par la pluralité d'éléments sensibles à la chaleur (34) ;
où la chambre de combustion (4) présente une forme sensiblement toroïdale ; les éléments sensibles à la chaleur (34) étant agencés le long d'une partie au moins d'une ou de plusieurs génératrices de la chambre de combustion toroïdale (4) ; et étant couplés à un élément de couplage (28) au moins.

13. Procédé selon la revendication 12, où les éléments sensibles à la chaleur (34) sont agencés le long des parois de la chambre de combustion (4).

14. Procédé selon la revendication 12 ou 13, où le compresseur (3) comprend un étage d'entrée (15) doté d'une pluralité d'ailettes de guidage d'entrée (16) ; l'étape consistant à réguler un premier paramètre au moins (PILOTpos ; IGVpos ; COOLpos; SPpower) de la centrale électrique (1) sur la base des valeurs de température (T1, T2 ... Tn) détectées par la pluralité d'éléments sensibles à la chaleur (34), comprenant une étape consistant à réguler au moins la position (IGVpos) des ailettes de guidage d'entrée (16) sur la base des valeurs de température (T1, T2 ... Tn) détectées par la pluralité d'éléments sensibles à la chaleur (34).

15. Procédé selon la revendication 14, où l'étape consistant à réguler au moins la position (IGVpos) des ailettes de guidage d'entrée (16) comprend les étapes suivantes consistant à :
- réguler la position (IGVpos) des ailettes de guidage d'entrée (16) sur la base d'une première valeur de référence (SPtetc) de la température au niveau de l'échappement de la turbine (5) ;
- corriger la première valeur de référence (SPtetc) en appliquant un premier facteur de correction (FCtetc) calculé sur la base des valeurs de température (T1, T2 ... Tn) détectées par la pluralité d'éléments sensibles à la chaleur (34).

16. Procédé selon l'une quelconque des revendications 12 à 15, où la chambre de combustion (4) est dotée d'un circuit d'approvisionnement en combustible (36) doté d'une canalisation d'approvisionnement pilote (37) et d'une soupape de régulation pilote (39), dont la position régule le débit pilote du combustible pilote fourni à la chambre de combustion (4) ; l'étape consistant à réguler un premier paramètre au moins (PILOTpos ; IGVpos ; COOLpos ; SPpower) de la centrale électrique (1) sur la base des valeurs de température (T1, T2 ... Tn) détectées par la pluralité d'éléments sensibles à la chaleur (34), comprenant une étape consistant à réguler au moins la position (PILOTpos) de la soupape de régulation pilote (39) sur la base des valeurs de température (T1, T2 ... Tn) détectées par la pluralité d'éléments sensibles à la chaleur (34).

17. Procédé selon la revendication 16, où l'étape consistant à réguler au moins la position (PILOTpos) de la soupape de régulation pilote (39) comprend les étapes suivantes consistant à :
- réguler la position de la soupape de régulation pilote (39) sur la base d'une deuxième valeur de référence (SPpilot), pour laquelle un débit de combustible pilote souhaité est fourni à la chambre de combustion (4) ;
- corriger la deuxième valeur de référence (SPpilot) en appliquant un deuxième facteur de correction (FCpilot) calculé sur la base des valeurs de température (T1, T2 ... Tn) détectées par la pluralité d'éléments sensibles à la chaleur (34).

18. Procédé selon l'une quelconque des revendications 12 à 17, comprenant un circuit de refroidissement (10) configuré afin d'extraire l'air du compresseur (3) et d'injecter l'air extrait dans la turbine à gaz (5), et doté d'une soupape de régulation de refroidissement (44), dont la position régule le flux d'air extrait du compresseur (3) ; l'étape consistant à réguler un premier paramètre au moins (PILOTpos ; IGVpos ; COOLpos ; SPpower) de la centrale électrique (1) sur la base des valeurs de température (T1, T2 ... Tn) détectées par la pluralité d'éléments sensibles à la chaleur (34) comprenant une étape consistant à réguler au moins la position (COOLpos) de la soupape de régulation de refroidissement (44) sur la base des valeurs de température (T1, T2 ... Tn) détectées par la pluralité d'éléments sensibles à la chaleur (34).

19. Procédé selon la revendication 18, où l'étape consistant à réguler au moins la position (COOLpos) de la soupape de régulation de refroidissement (44) comprend les étapes suivantes consistant à :
- réguler la position de la soupape de régulation de refroidissement (44) sur la base d'une troisième valeur de référence (SPcool), pour laquelle un débit d'air souhaité est extrait du compresseur (3) ;
- corriger la troisième valeur de référence (SPcool) en appliquant un troisième facteur de correction (FCcool) calculé sur la base des valeurs de température (T1, T2 ... Tn) détectées par la pluralité d'éléments sensibles à la chaleur (34).

20. Procédé selon l'une quelconque des revendications 12 à 19, comprenant une étape consistant à modifier une valeur de référence de puissance (SPpower) sur la base des valeurs de température (T1, T2 ... Tn) détectées par la pluralité d'éléments sensibles à la chaleur (34).

21. Procédé selon l'une quelconque des revendications 12 à 20, comprenant une étape consistant à surveiller les valeurs de température (T1, T2 ... Tn) détectées par les éléments sensibles à la chaleur (34) et à déclencher un signal d'alarme lorsque l'une au moins des valeurs de température (T1, T2 ... Tn) dépasse une valeur de seuil prédéfinie (Tmax).
